# EUROPEAN PATENT SPECIFICATION

(11) **EP 3 199 022 B1**
(45) Date of publication and mention of the grant of the patent: **27.03.2019**
(21) Application number: 14902308.7
(22) Date of filing: 24.09.2014
(51) Int. Cl.: A01M 1/16, H04N 7/18, H04L 29/08, A01M 1/14, A01M 1/08, A01M 1/10, A01M 1/02, A01K 29/00

(54) **SMART IMAGING SYSTEM AND INSECT-TRAPPING APPARATUS PROVIDED WITH SAME**
INTELLIGENTES BILDGEBUNGSSYSTEM UND DAMIT AUSGESTATTETE INSEKTENFALLENVORRICHTUNG
SYSTÈME D'IMAGERIE INTELLIGENT, ET APPAREIL DE PIÉGEAGE D'INSECTE LE COMPRENANT

(43) Date of publication of application: 02.08.2017
(73) Proprietor: Shanghai Xingrang Industrial Co., Ltd., Shanghai 201400 (CN)
(72) Inventor: JI, Yiqian, Shanghai 201400 (CN); JI, Hebin, Shanghai 201400 (CN); CHEN, Lihong, Shanghai 201400 (CN)
(74) Representative: Sun, Yiming
(86) International application number: PCT/CN2014/087238
(87) International publication number: WO 2016/045002

(56) References cited:
- EP-A1- 2 730 165
- CN-A- 103 125 457
- CN-A- 103 125 457
- CN-A- 103 598 169
- CN-A- 103 970 095
- CN-A- 103 970 095
- CN-U- 204 157 515

## Description

### Technical Field

The Invention relates to an intelligent pest-catching device, and particularly to an intelligent imaging identification system and a pest-catching device thereof.

### Background Art

With 5 steps as changing adhering paper, checking and sorting pests, filling in record card, filing records and analyzing pests, the existing sticking-type pest-catching device on the market consumes large quantity of labor and time. Thus, the maintenance cost for pest services in food processing and food related industries stays at a high level. For example, for 100 pest-catching devices, it takes 1 day for 1 technician to work on the steps of changing adhering paper, checking and sorting pests and filling in record card and takes 1 day for 1 technician to work on the steps of filing records and analyzing pests. In total, it takes 2 working days and consumes many unnecessary labor cost. Relevant state of the art in this technical field are the follwoing documents: CN 103 970 095, CN 103 125 457, EP 1 730 165.

### Summary of the Invention

The Invention provides a pest catching device with an intelligent imaging identification system thereof, which solves the above technical problems of prior art.

The technical scheme of the Invention is realized as follows:
A pest catching device with an intelligent imaging identification system, comprising an intelligent chip, a mini picture-taking lens and a display screen; the mini picture-taking lens and display screen are connected to the intelligent chip; the intelligent chip comprises a control module, a timing imaging module and a communication module; the control module is used for controlling the imaging identification system to start, sleep, restart, take picture, upload and download data and connect with a server; the timing imaging module is used for controlling the mini picture-taking lens to take pictures at a fixed time; the communication module is used for sending the pictures taken by the mini picture-taking lens to the server and receiving the feedback data from the server; the display screen is used for displaying the feedback data of the server.

As a further improvement of the Invention, the server is used for managing the running status of the intelligent imaging identification system, analyzing the pictures taken by the mini picture-taking lens and sending the feedback data to the intelligent imaging identification system.

As a further improvement of the Invention, the communication module is either a WIFI communication module or an SIM card communication module.

As a further improvement of the Invention, the intelligent chip further comprises an image identification module for identifying pest species intelligently.

The Invention also provides a pest-catching device installed with the intelligent imaging identification system, comprising a fixed board, a pest-catching mechanism and an intelligent imaging identification system; the pest-catching mechanism, which comprises a piece of adhering paper, is arranged on the fixed board; the mini picture-taking lens in the intelligent imaging identification system takes pictures of the pests caught by the adhering paper.

As a further improvement of the Invention, the pest-catching mechanism further comprises a paper-feeding reel, a collecting reel and a holder for adhering paper; the collecting reel is arranged below the paper-feeding reel; the adhering paper stretches out from the paper-feeding reel, winding on the holder for adhering paper and entering the collecting reel; the mini picture-taking lens in the intelligent imaging identification system is arranged below the holder for adhering paper.

As a further improvement of the Invention, the pest-catching mechanism is further arranged with a driving device; the driving device is arranged on the back of the fixed board and connected to the collecting reel.

As a further improvement of the Invention, the driving device is a hand crank; the hand crank is connected to the collecting reel through a belt.

As a further improvement of the Invention, the driving device is an electric motor; the electric motor is connected to the collecting reel through a belt; the pest-catching mechanism is further arranged with a timer to control the electric motor to rotate at a fixed time.

As a further improvement of the Invention, a UVA trap lamp is arranged on the holder for adhering paper; a lamp cover is arranged on the fixed board.

The advantages of the invention are as follows:
The Invention solves the technical defects of existing products through the intelligent imaging identification system. If using a pest-catching device installed with the intelligent imaging identification system, it only takes 6 minutes for 1 person to finish the works for 100 pest-catching devices and get through the steps of filing records and analyzing pests, saves 1 day of working time and significantly reduces the costs for maintenance and consumables, and enables the managers to remotely know the conditions of building sealing, sanitation and personnel specification on site, and thus brings more convenient management and economic benefits to enterprises authentically.

### Brief Description of the Drawings

In order to illustrate the technical schemes in the embodiments of the Invention more clearly, the drawings required in description of the embodiments will be introduced briefly as follows. Obviously, the drawings in the following description are just a part of the embodiments of the Invention. A person skilled in the art is able to obtain other drawings according to these drawings without any creative work.
Fig. 1 is a principle diagram of the intelligent imaging identification system of the Invention;
Fig. 2 is a structural diagram of the Invention;
Fig. 3 is a structural diagram of the pest-catching mechanism of the Invention;
Fig. 4 is a diagram of the connection between the hand crank and the collecting reel;
Fig. 5 is a diagram of the connection between the electric motor and the collecting reel.

### Detailed Description of the Preferred Embodiments

A clear and full description of the technical schemes of the embodiments of the Invention will be given in combination of the drawings of the embodiments of the Invention as follows. Obviously, the described embodiments are just a part rather than the whole of the embodiments of the Invention.

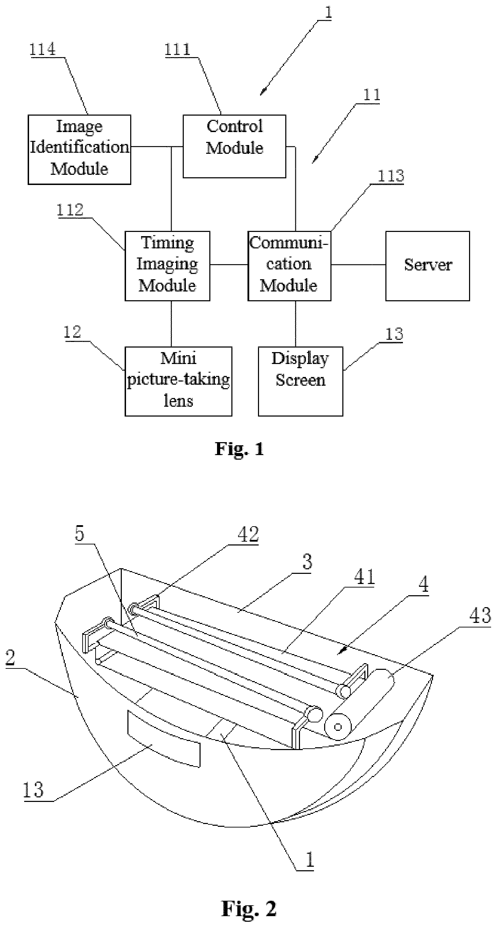

As shown in Fig. 1, an intelligent imaging identification system 1, comprising an intelligent chip 11, a mini picture-taking lens 12 and a display screen 13; the intelligent chip 11 comprises a control module 111, a timing imaging module 112, a communication module 113 and an image identification module 114; the control module 111 is used for controlling the imaging identification system 1 to start, sleep, restart, picture-taking, upload and download data and connect with a server; the timing imaging module 112 is used for controlling the mini picture-taking lens 12 to take pictures at a fixed time; the communication module 113 is used for sending the pictures taken by the mini picture-taking lens 12 to the server and receiving the feedback data from the server; the display screen 13 is used for displaying the feedback data of the server. Wherein, the server is used for managing the running status of the intelligent imaging identification system 1, analyzing the pictures taken by the mini picture-taking lens 12 and sending the feedback data to the intelligent imaging identification system 1; the communication module 113 is a WIFI communication module or an SIM card communication module.

The manager sets picture-taking instructions through the server; the server issues the instructions to the intelligent imaging identification system 1; the intelligent imaging identification system 1 controls the mini picture-taking lens 12 to take pictures at a fixed time according to the received instructions, uploads the pictures to the server and receives the feedback data from the server.

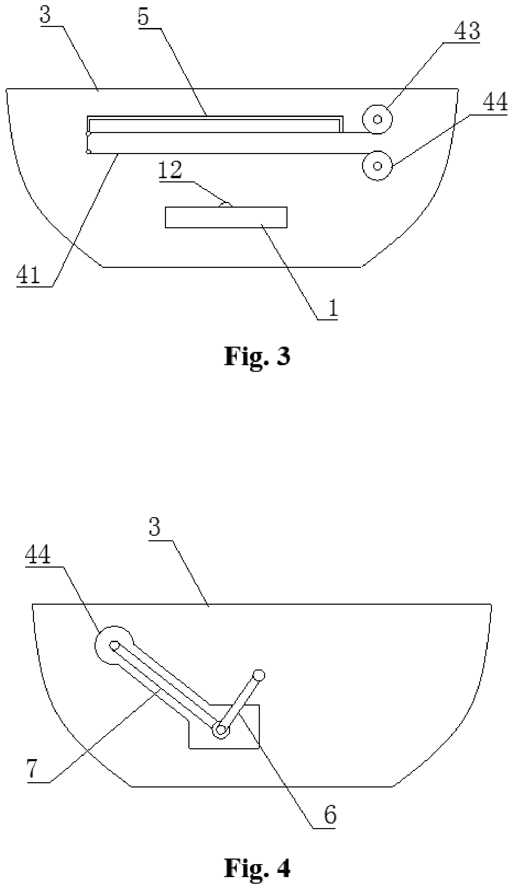

As shown in Figs. 2 and 3, the Invention further provides a pest-catching device installed with the intelligent imaging identification system 1, comprising a lamp cover 2, a fixed board 3, a pest-catching mechanism 4 arranged on the fixed board 3 and an intelligent imaging identification system 1 arranged below the pest-catching mechanism 4.

The pest-catching mechanism 4 further comprises a piece of adhering paper 41, a holder for adhering paper 42, a paper-feeding reel 43 and a collecting reel 44; the collecting reel 44 is arranged below the paper-feeding reel 43; the adhering paper 41 stretches out from the paper-feeding reel 43, winding on the holder for adhering paper 42 and entering the collecting reel 44; a UVA trap lamp 5 is arranged on the holder for adhering paper 42;

The mini picture-taking lens 12 of the intelligent imaging identification system 1 is arranged below the pest-catching mechanism 4 and used for taking the pictures of the pests caught by the adhering paper 41; the display screen 13 is arranged on the outer wall of the lamp cover and used for displaying the feedback data of the server; the feedback data refers to the species, quantities of the pest and the pest analysis report, etc.

As shown in Fig. 4, a driving device 6 is arranged on the back of the fixed board 3; the driving device 6 is a hand crank, which is connected to the collecting reel 44 through a belt 7; turning of the hand crank can drive the collecting reel 44 to rotate, thus feeding the adhering paper 41 into the collecting reel 44 through the paper-feeding reel 43.

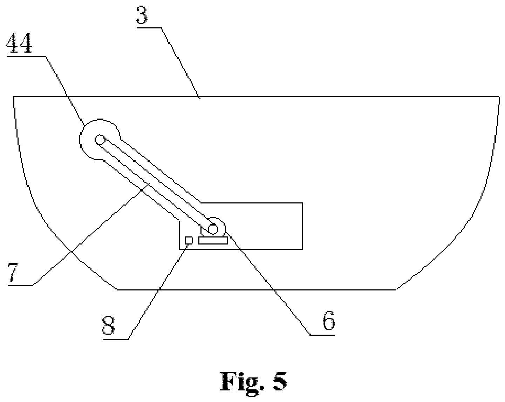

As shown in Fig. 5, the driving device 6 also can be an electric motor, which is connected to the collecting reel 44 through a belt 7; the pest-catching mechanism 4 is also arranged with a timer 8 to control the electric motor to rotate at a fixed time; the timer 8 is connected to the electric motor and controls the motor to rotate once per 1-2 weeks, driving the adhering paper 41 with pests to roll from the upward side to the downward side of the holder for adhering paper 42, so that the mini picture-taking lens 12 can take pictures of the pests caught by the adhering paper 41.

The working principle of the Invention is as follows:
When pests are stuck onto the adhering paper 41, the driving device 6 drives the collecting reel 44 to rotate, rolling the adhering paper 41 with the pests to the corresponding position of the mini picture-taking lens 12 below the holder for adhering paper 42; the mini picture-taking lens 12 takes pictures of the pests and transmits the pictures to the server through the communication module 113; the manager analyzes the pictures for counting the species and quantities of the pests and sends the pest analysis report to the intelligent imaging identification system 1; the intelligent imaging identification system 1 displays the feedback data on the display screen 13 so that it can be viewed by technical personnel.

If the driving device 6 is an electric motor, the timer 8 controls the electric motor to rotate once per 1-2 weeks, driving the adhering paper 41 with pests to roll to the corresponding position of the mini picture-taking lens 12 below the holder for adhering paper 42, then the timing imaging module 112 controls the mini picture-taking lens 12 to take pictures of the adhering paper 41 once or twice per week. Certainly, the above periods are not fixed. The period of the electric motor to rotate can be set through the timer 8; also the period of the mini picture-taking lens 12 to take pictures can be set through the server.

The Invention solves the technical defects of existing products through the intelligent imaging identification system. If using the pest-catching device installed with the intelligent imaging identification system, it only takes 6 minutes for 1 person to finish the works for 100 pest-catching devices and get through the steps of filing records and analyzing pests, saves 1 day of working time and significantly reduces the costs for maintenance and consumables, and enables the managers to remotely know the conditions of building sealing, sanitation and personnel specification on site, and thus brings more convenient management and economic benefits to enterprises authentically.

The above pest identification belongs to artificial identification; of course the identification efficiency can be further improved through the image identification module 114. The function of automatic identification shall be realized with the help of software. The Invention develops a kind of identification software with a kernel algorithm of identification and counting of pest species based on computer vision/image identification/neural network/pattern identification/deep learning technologies. The development of the identification software comprises the following procedures of:

### I. Establishing a training database for pest identification and counting and evaluation system is to:

Establishing training database for pest identification; collecting pest specimens of different distribution density for marking; marking the pests need to be counted for model training and learning. The more abundant the data in the database is, the more accurate the forecasted result will be. Moreover, the training data is expandable. The data can be added constantly with the deepening of the project to upgrade the depth model.

Develop a scientific evaluation system for solutions and establish a standard format of forecasted data to realize automatic assessment and statistics of the algorithm results, comprising establishing distributions of different density, testing data set in different conditions and developing scientific evaluation indicators (e.g., mean absolute error, average variance and error in the environment of different density of different and overall species of pests). Select a proper solution for different application environment through establishment of evaluation system and horizontal assessment and comparison of related algorithms.

### II.Training depth learning model for pest classification counting

Depth learning model uses the method of depth leaning to realize pest identification and counting and establish a multi-layer network model. It automatically obtains an estimation model of distribution density of pests through training the abundant marked data and obtains the quantity of different pests in the area through the integral of density distribution in corresponding area. Wherein, the model structure, parameter initialization and objective function design use GoogLenet network and VG network to describe, classify and count the pests and build a bridge for the field gap between the input images and the forecasted value through designing the object function and the method for information transmission.

For the algorithm framework of depth learning model of pest classification and counting, the model is input with the specimen of pest collecting board to output the true value density diagram of different pests obtained according to the marked information. Collecting image blocks randomly in the specimen and collecting the density true value of the corresponding position in the true value density diagram and the corresponding quantity of different pests and then obtaining a corresponding model through training the depth model with the method of mini-batch back propagation.

### III. Cross-platform pest identification and counting system development is to:

Optimize and package the algorithm based on the determined kernel algorithm to improve the calculating speed of the algorithm so that it can adapt to different platforms; form a releasable SDK (software development kit) through sorting and optimization of the kernel algorithm to embed it into the database system and develop apps for PC and mobile platforms and from a software system. Realize full automation and intellectualization of pest identification technology in combination with the terminal device of pest identification technology and update statistical information to PC and mobile platforms in real time through the server.

Combined with the above identification software, the pest identification module can identify the species of the pests and count the number of each species. As shown in Fig. 2, the working principle mainly comprises the following steps of: pest specimen collection - marking of pest species - depth learning - inputting algorithm model of kernel database - pest identification - target imaging and inputting into system - outputting species and quantities of the pests.

Further, the data can be transmitted to a terminal control module through the communication module; the terminal control module comprises a PC terminal and a mobile terminal such as computer, cellphone and tablet, etc.; it is mainly used for data displaying, input and retrieval of the cloud data server, pest data query, viewing of system operation condition, real-time monitoring of pests and input of data and instructions.

## Claims

1. A pest catching device with an intelligent imaging identification system, wherein, comprising an intelligent chip, a mini picture-taking lens and a display screen; the mini picture-taking lens and display screen are connected to the intelligent chip; the intelligent chip comprises a control module, a timing imaging module and a communication module; the control module is used for controlling the imaging identification system to start, sleep, restart, take pictures, upload and download data and connect with a server; **characterized in that** the timing imaging module is used for controlling the mini picture-taking lens to take pictures at a fixed time; the communication module is used for sending the pictures taken by the mini picture-taking lens to the server and receiving the feedback data from the server; the display screen is used for displaying the feedback data of the server.

2. The pest catching device with the intelligent imaging identification system according to Claim 1, wherein, the server is used for managing the running status of the intelligent imaging identification system, analyzing the pictures taken by the mini picture-taking lens and sending the feedback data to the intelligent imaging identification system.

3. The pest catching device with the intelligent imaging identification system according to Claim 2, wherein, the communication module is a WIFI communication module or an SIM card communication module.

4. The pest catching device with the intelligent imaging identification system according to Claim 3, wherein, the intelligent chip further comprises an image identification module for identifying and counting pest species intelligently.

5. The pest-catching device with the intelligent imaging identification system according to any of Claims 1-4, wherein, comprising a fixed board, a pest-catching mechanism and an intelligent imaging identification system; the pest-catching mechanism, which comprises a piece of adhering paper, is arranged on the fixed board; the mini picture-taking lens in the intelligent imaging identification system takes pictures of the pests caught by the adhering paper.

6. The pest-catching device according to Claim 5, wherein, the pest-catching mechanism further comprises a paper-feeding reel, a collecting reel and a holder for adhering paper; the collecting reel is arranged below the paper-feeding reel; the adhering paper stretches out from the paper-feeding reel, winding on the holder for adhering paper and entering the collecting reel; the mini picture-taking lens in the intelligent imaging identification system is arranged below the holder for adhering paper.

7. The pest-catching device according to Claim 6, wherein, the pest-catching mechanism is further arranged with a driving device; the driving device is arranged on the back of the fixed board and connected to the collecting reel.

8. The pest-catching device according to Claim 7, wherein, the driving device is a hand crank; the hand crank is connected to the collecting reel through a belt.

9. The pest-catching device according to Claim 7, wherein, the driving device is an electric motor; the electric motor is connected to the collecting reel through a belt; the pest-catching mechanism is further arranged with a timer to control the electric motor to rotate at a fixed time.

10. The pest-catching device according to Claim 8 or 9, wherein, a UVA trap lamp is arranged on the holder for adhering paper; a lamp cover is arranged on the fixed board.

## Patentansprüche

1. Schädlingsfangeinrichtung mit einem intelligenten Bildgebungsidentifikationssystem, umfassend einen intelligenten Chip, ein Mini-Bildaufnahmeobjektiv und einen Anzeigebildschirm; wobei das Mini-Bildaufnahmeobjektiv und der Anzeigebildschirm mit dem intelligenten Chip verbunden sind; der intelligente Chip ein Steuermodul, ein Timing-Bildgebungsmodul und ein Kommunikationsmodul umfasst; und das Steuermodul verwendet wird, um das Bildgebungsidentifikationssystem zum Starten, Schlafen, Neustarten, Aufnehmen von Bildern, Hochladen und Herunterladen von Daten und Verbinden mit einem Server zu steuern; **dadurch gekennzeichnet, dass** das Timing-Bildgebungsmodul verwendet wird, um das Mini-Bildaufnahmeobjektiv zum Aufnehmen von Bildern zu einer festen Zeit zu steuern; das Kommunikationsmodul verwendet wird, um die durch das Mini-Bildaufnahmeobjektiv aufgenommenen Bilder zum Server zu senden und die Rückmeldedaten vom Server zu empfangen; und der Anzeigebildschirm verwendet wird, um die Rückmeldedaten des Servers anzuzeigen.

2. Schädlingsfangeinrichtung mit dem intelligenten Bildgebungsidentifikationssystem nach Anspruch 1, wobei der Server verwendet wird, um den Betriebsstatus des intelligenten Bildgebungsidentifikationssystems zu verwalten, die durch das Mini-Bildaufnahmeobjektiv aufgenommenen Bilder zu analysieren und die Rückmeldedaten zum intelligenten Bildgebungsidentifikationssystem zu senden.

3. Schädlingsfangeinrichtung mit dem intelligenten Bildgebungsidentifikationssystem nach Anspruch 2, wobei das Kommunikationsmodul ein WiFi-Kommunikationsmodul oder ein SIM-Karten-Kommunikationsmodul ist.

4. Schädlingsfangeinrichtung mit dem intelligenten Bildgebungsidentifikationssystem nach Anspruch 3, wobei der intelligente Chip ferner ein Bildidentifikationsmodul zum intelligenten Identifizieren und Zählen von Schädlingsarten umfasst.

5. Schädlingsfangeinrichtung mit dem intelligenten Bildgebungsidentifikationssystem nach einem der Ansprüche 1-4, umfassend eine feste Platte, einen Schädlingsfangmechanismus und ein intelligentes Bildgebungsidentifikationssystem; wobei der Schädlingsfangmechanismus, der ein Stück Haftpapier umfasst, auf der festen Platte angeordnet ist; und das Mini-Bildaufnahmeobjektiv im intelligenten Bildgebungsidentifikationssystem Bilder der durch das Haftpapier gefangenen Schädlinge aufnimmt.

6. Schädlingsfangeinrichtung nach Anspruch 5, wobei der Schädlingsfangmechanismus ferner eine Papierzuführspule, eine Aufrollspule und einen Haftpapierhalter umfasst; die Aufrollspule unter der Papierzuführspule angeordnet ist; das Haftpapier sich von der Papierzuführspule erstreckt, sich um den Haftpapierhalter wickelt und in die Aufrollspule eintritt; und das Mini-Bildaufnahmeobjektiv im intelligenten Bildgebungsidentifikationssystem unter dem Haftpapierhalter angeordnet ist.

7. Schädlingsfangeinrichtung nach Anspruch 6, wobei der Schädlingsfangmechanismus ferner mit einer Antriebseinrichtung eingerichtet ist; und die Antriebseinrichtung an der Rückseite der festen Platte angeordnet und mit der Aufrollspule verbunden ist.

8. Schädlingsfangeinrichtung nach Anspruch 7, wobei die Antriebseinrichtung eine Handkurbel ist; und die Handkurbel über einen Riemen mit der Aufrollspule verbunden ist.

9. Schädlingsfangeinrichtung nach Anspruch 7, wobei die Antriebseinrichtung ein Elektromotor ist; der Elektromotor über einen Riemen mit der Aufrollspule verbunden ist; und der Schädlingsfangmechanismus ferner mit einem Timer eingerichtet ist, um den Elektromotor zum Drehen zu einer festen Zeit zu steuern.

10. Schädlingsfangeinrichtung nach Anspruch 8 oder 9, wobei eine UVA-Fanglampe am Haftpapierhalter angeordnet ist; und eine Lampenabdeckung an der festen Platte angeordnet ist.

## Revendications

1. Dispositif de capture d'organismes nuisibles avec un système intelligent d'identification par imagerie, comprenant une puce intelligente, un objectif miniature de prise de vues et un écran d'affichage ; dans lequel l'objectif miniature de prise de vues et l'écran d'affichage sont connectés à la puce intelligente ; la puce intelligente comprend un module de commande, un module d'imagerie de synchronisation et un module de communication ; le module de commande est utilisé pour contrôler le système d'identification par imagerie afin de démarrer, de mettre en veille, de redémarrer, de prendre des vues photos, de télécharger et de décharger des données et de se connecter à un serveur ; **caractérisé en ce que** le module d'imagerie de synchronisation est utilisé pour commander l'objectif miniature de prise de vues pour prendre des photos à un moment fixe ; le module de communication est utilisé pour envoyer les photos prises par l'objectif miniature de prise de vues au serveur et recevoir les données de retour du serveur ; l'écran d'affichage est utilisé pour afficher les données de retour du serveur.

2. Dispositif de capture d'organismes nuisibles avec le système intelligent d'identification par imagerie selon la revendication 1, dans lequel le serveur est utilisé pour gérer l'état de fonctionnement du système intelligent d'identification par imagerie, pour analyser les photos prises par l'objectif miniature de prise de vues et pour envoyer les données de retour au système intelligent d'identification par imagerie.

3. Dispositif de capture d'organismes nuisibles avec le système intelligent d'identification par imagerie selon la revendication 2, dans lequel le module de communication est un module de communication WIFI ou un module de communication par carte SIM.

4. Dispositif de capture d'organismes nuisibles avec le système intelligent d'identification par imagerie selon la revendication 3, dans lequel la puce intelligente comprend en outre un module d'identification d'image pour identifier et compter intelligemment les espèces d'organismes nuisibles.

5. Dispositif de capture d'organismes nuisibles avec le système intelligent d'identification par imagerie selon l'une quelconque des revendications 1 à 4, comprenant une planche fixe, un mécanisme de capture d'organismes nuisibles et un système intelligent d'identification par imagerie ; dans lequel le mécanisme de capture d'organismes nuisibles, qui comprend un morceau de papier adhésif, est disposé sur le panneau fixe ; l'objectif miniature de prise de vues du système intelligent d'identification par imagerie prend des photos des organismes nuisibles capturés par le papier adhésif.

6. Dispositif de capture d'organismes nuisibles selon la revendication 5, dans lequel le mécanisme de capture des organismes nuisibles comprend en outre une bobine d'alimentation du papier, une bobine collectrice et un support du papier adhésif ; la bobine collectrice est disposée sous la bobine d'alimentation du papier ; le papier adhésif s'étire hors de la bobine d'alimentation du papier, s'enroule sur le support du papier adhésif et pénètre dans la bobine collectrice ; l'objectif miniature de prises de vue du système intelligent d'identification par imagerie est disposé sous le support du papier adhésif.

7. Dispositif de capture d'organismes nuisibles selon la revendication 6, dans lequel le mécanisme de capture des organismes nuisibles est en outre agencé avec un dispositif d'entraînement ; le dispositif d'entraînement étant disposé à l'arrière de la planche fixe et relié à la bobine collectrice.

8. Dispositif de capture d'organismes nuisibles selon la revendication 7, dans lequel le dispositif d'entraînement est une manivelle ; la manivelle est reliée à la bobine collectrice par une courroie.

9. Dispositif de capture d'organismes nuisibles selon la revendication 7, dans lequel le dispositif d'entraînement est un moteur électrique ; le moteur électrique est relié à la bobine collectrice par une courroie ; le mécanisme de capture des organismes nuisibles est en outre agencé avec une temporisation pour commander la rotation du moteur électrique à un moment fixe.

10. Dispositif de capture d'organismes nuisibles selon la revendication 8 ou 9, dans lequel, une lampe piège UVA est disposée sur le support du papier adhésif ; et une couverture de lampe est disposée sur la planche fixe.
